# EUROPEAN PATENT APPLICATION

(11) **EP 4 728 883 A1**
(43) Date of publication of application: **22.04.2026**
(21) Application number: 24825381.7
(22) Date of filing: 18.06.2024
(51) Int. Cl.: A23N 5/00, A01G 31/00

(54) **TEGUMENT PROCESSING DEVICE FOR FOOD USE**

(30) Priority: 19.06.2023 ES 202330505
(71) Applicant: Arba Negocios, S.L., 03001 Alicante (ES)
(72) Inventor: GÓMEZ CAMARASA, Alejandro, 03001 Alicante (ES)
(74) Representative: Herrero & Asociados, S.L.
(86) International application number: PCT/ES2024/070380
(87) International publication number: WO 2024/261366

(57) **Abstract**

Device for processing teguments for food use, connected to the outlet of the peeling machine in a nut processing line for recovering and treating the skins adhering to the nut and removed after peeling. **It** comprises:
- a suction module (1) with an inlet, a first turbine (5) for generating a suction flow; and a cyclone-depressor (6);
- a conveyor module (2);
- a drying module (3) for extracting moisture from the skins by applying heat, which in turn comprises an internal conveyor, a second turbine (8), a heat exchanger (9), a hot air flow recirculation system (10); and a separator for removing impurities from the dried skins;
- a shredding module (4) for reducing the particle size of the skins; and
- an external controller for controlling and automating the elements of the device.

## Description

### PURPOSE OF THE INVENTION

The present invention falls within the technical field of machines for shelling, husking or cracking nuts, as well as machines for removing the fleshy or fibrous skins from nuts. The invention relates in particular to a device for processing teguments, mainly from nuts, which allows the separation of the skins obtained after peeling the nuts for subsequent use and recovery as a secondary product. It is preferably designed for almonds, although it is also applicable to other products such as pistachios.

### BACKGROUND OF THE INVENTION

Among the treatments that nuts undergo for subsequent consumption, it is known that, after conditioning the fruit by blanching it under specific time and temperature conditions, a peeling process takes place that allows the separation of the skin attached to the kernel, known as the tegument. In this way, a skin-free product is delivered at the end of the production line, and a constant flow of wet skins is generated as waste, which is sent to external tanks for subsequent disposal.

Almond bran is rich in antioxidants and dietary fibre and is ideal for both functional foods and nutritional supplements. Without the calories and fats associated with eating whole almonds, almond bran is considered a concentrated nutritional supplement. It is therefore a by-product of the nut industry with high commercial interest, which must be recovered for subsequent valorisation.

In the current state of the art, various devices are known for peeling and repelling nuts, which include elements for separating the skins and s by projecting a jet of air. Normally, these skins are discarded, as no further treatment after separation is usually mentioned. For example, document ES2127071 describes a machine for recovering waste (malformed or immature fruits) from almonds and other nuts, while document US8943955 describes a machine for shelling and separating almonds and other soft-shelled nuts that incorporates operational and functional features that ensure the kernel is obtained in optimal condition, while also allowing for the effective separation of almonds and other hard-shelled nuts that may accompany soft-shelled nuts.

Among the few exceptions of documents describing machines that allow the use of by-products from the nut industry is document ES2195718, which describes a facility and a process for the production of a substrate based on crushed almond shells and its use as a substrate in hydroponic crops.

In other words, there are various known uses for by-products such as shells. However, the characteristics of the shell are significantly different from those of the skin and therefore require different devices and treatments.

### DESCRIPTION OF THE INVENTION

The object of the invention is a device for processing nut teguments that allows the separation of the skins obtained after shelling nuts, for their subsequent use and recovery as a secondary product. It is preferably designed for almonds, although it is applicable to other nuts that have husks attached to the kernel, such as pistachios.

Thus, the device of the invention allows waste to be converted into a new value-added ingredient for the food industry. The wet skin, separated from the kernel after peeling, is sucked up for subsequent reuse as bran through processes such as drying and grinding.

The device comprises, first of all, a skin suction system, with a turbine and cyclone-depressor, which is responsible for sucking up the wet skin from the almond peeling machine. The cyclone-depressor has a lower product outlet that prevents air from escaping, with a rotary valve.

The device then comprises a conveyor, preferably a screw conveyor, which moves the wet skin into a skin dryer. The conveyor includes a compressed air injection system to prevent the wet skins from sticking inside. In addition, there are two auxiliary outlets to evacuate the product in case the pasteurisation conditions have not been met in the peeling line.

It should be noted at this point that the skins have been previously pasteurised in the peeling process together with the almond kernels. The processing device described here does not break the pasteurisation conditions, as it only continuously diverts the flow of skins to another parallel process.

The wet skins enter the skin dryer, where the moisture is extracted. The skins are transported through the dryer while being dried simultaneously by hot air generated by a turbine and a heat exchanger. The dryer also includes a hot air recycling system to increase the efficiency of the heat exchanger.

After drying, the device includes a separating element that allows the recovery of grains and almond fragments that were mixed with the flow of skins.

After separation, the dried skins are transported to a grinding mill, which comprises high-efficiency rotating hammers. The skins are immediately ground, resulting in almond bran ready for use in the food industry.

The device described above can also be used in the processing of other types of food products, such as dehydrated and ground nematodes.

### DESCRIPTION OF THE DRAWINGS

To supplement the description being made and to aid in a better understanding of the characteristics of the invention, in accordance with a preferred example of its practical implementation, a set of drawings is included as an integral part of this description, in which, for illustrative and non-limiting purposes, the following is represented:
Figure 1 shows a perspective view of the device, in which its main constituent elements can be seen.
Figure 2.- Shows a right-side view of the device.
Figure 3.- Shows a plan view of the device.

### PREFERRED EMBODIMENT OF THE INVENTION

A detailed explanation of an example of a preferred embodiment of the object of the present invention is provided below with the aid of the aforementioned figures.

The device for processing teguments for food use described herein can be inserted into a nut processing line, more specifically at the outlet of the peeling machine. It is designed for the recovery and treatment of the teguments, hereinafter referred to as skins, removed from the fruit after peeling, for subsequent use as bran.

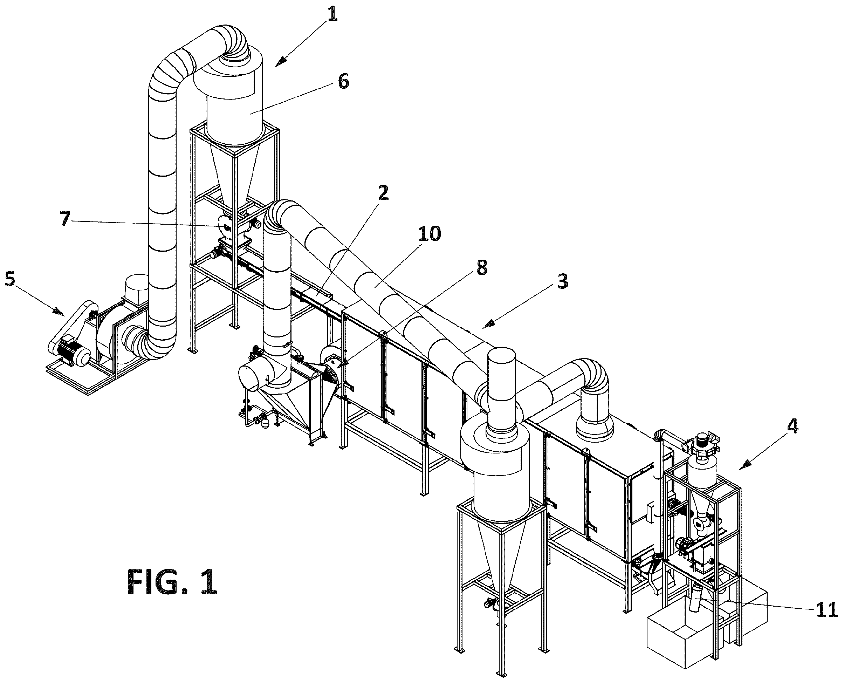

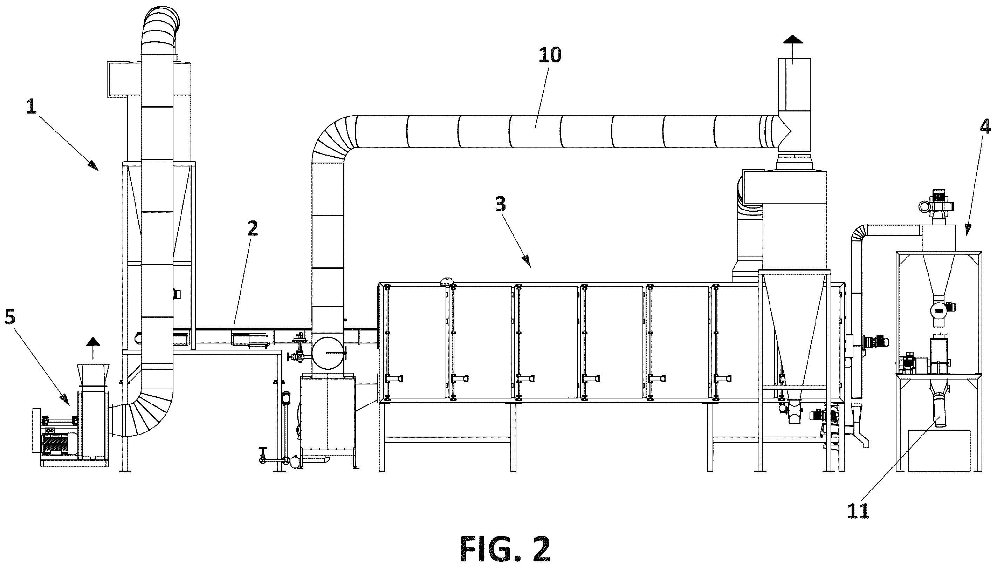

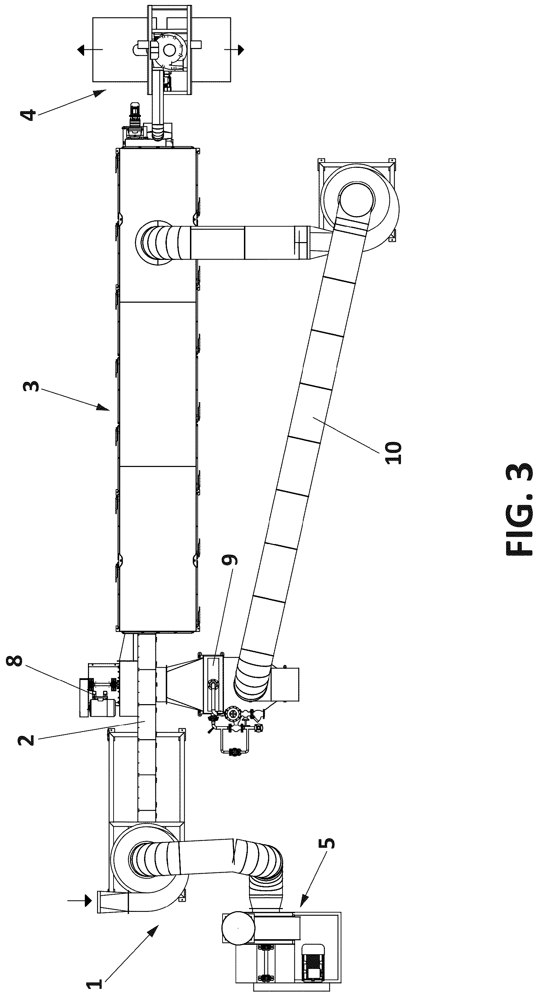

To this end, the device comprises a plurality of consecutive and interconnected modules, more specifically a suction module (1), a conveyor module (2), a drying module (3) with air recirculation, and a shredding module (4), as shown in figures 1 to 3.

The suction module (1) comprises an inlet for suctioning wet hides from the skinning machine, not shown in the accompanying figures. The suction module (1) also comprises a first turbine (5) for generating a suction flow, and a cyclone-depressor (6) with a lower product outlet (7) that prevents the suction flow from escaping. An external controller, not shown in the accompanying figures, automatically controls the operation of all the elements of the device.

Next is the conveyor module (2), which collects the flow of wet skins from the suction module (1) for subsequent introduction into the drying module (3). In the preferred embodiment described here, the conveyor module (2) consists of a screw conveyor that pushes the wet skins and incorporates a compressed air injection system to prevent the wet skins from sticking.

In alternative embodiments of the device, the conveyor module (2) consists of vibrating trays for transporting the wet skins.

Likewise, the conveyor module (2) comprises auxiliary outlets for extracting the product in the event of emergencies such as jams, unexpected stoppages or even in the event of detection of abnormal temperature or humidity conditions. For this purpose, the incorporation of sensors linked to the external controller is provided.

The screw conveyor, or equivalent conveyor element, of the conveyor module (2) extends into the drying module (3) to extract moisture from the hides by applying heat. This dryer module (3) comprises an internal conveyor, a second turbine (8) and a heat exchanger (9).

The second turbine (8) and the heat exchanger (9) generate a flow of hot air that dries the skins as they advance through the interior of the drying module (3), driven linearly by the internal conveyor. In this preferred embodiment, said internal conveyor of the drying module (3) consists of a screw conveyor.

The drying module (3) further comprises a recirculation system (10) for the hot air and hot water generated, in order to increase the efficiency of the heat exchanger (9).

The drying module (3) also comprises a separating element that allows the extraction and separation of grains, fruit fragments and other impurities that may be mixed with the dried skins. In this preferred embodiment, said separator is a gravity separator.

In alternative embodiments of the device, the drying module (3) is a vertical fluidised bed dryer.

After drying and separation of any impurities, the flow of dried skins passes from the drying module (3) to the shredding module (4), where they are subjected to abrasive grinding to modify their particle size, reducing their particle size. In this preferred embodiment, this grinding is carried out by high-efficiency rotary hammers. The shredding module (4) also comprises a discharge outlet (11) for extracting the bran obtained.

## Claims

1. Device for processing teguments for food use, which can be connected to the outlet of the peeling machine in a nut processing line for recovering and treating the skins adhering to the nut and removed after peeling, being the device **characterised in that** it comprises:
- a suction module (1), which in turn comprises:
- an inlet for the entry of wet skins from the peeling machine;
- a first turbine (5) for generating a suction flow; and
- a cyclone-depressor (6), with a lower product outlet (7);
- a conveyor module (2) for collecting wet skins from the suction module (1);
- a drying module (3) for extracting moisture from the skins by applying heat, which in turn comprises:
- an internal conveyor,
- a second turbine (8) and a heat exchanger (9) for generating a hot air flow;
- a hot air flow recirculation system (10); and
- a separator for removing impurities from the dried skins;
- a shredding module (4) for reducing the particle size of the skins by grinding; and
- an external controller for controlling and automating the elements of the device.

2. Processing device according to claim 1, wherein the conveyor module (2) further comprises a compressed air injection system.

3. Processing device according to any of the preceding claims, wherein the conveyor module (2) is a screw conveyor that pushes the wet skins.

4. Processing device according to any of the previous claims, wherein the conveyor module (2) comprises auxiliary outlets for product extraction.

5. Processing device according to any of the preceding claims, wherein the separator of the drying module (3) is a gravity separator.

6. Processing device according to any of the preceding claims, wherein the shredding module (4) comprises high-efficiency rotary hammers for reducing particle size.

7. Processing device according to claim 1, wherein the conveyor module (2) consists of vibrating trays for transporting the wet skins.

8. Processing device according to claim 1, wherein the drying module (3) is a vertical fluidised bed dryer.
